# EUROPÄISCHE PATENTANMELDUNG

(11) **EP 1 122 530 A2**
(43) Veröffentlichungstag der Anmeldung: **08.08.2001**
(21) Anmeldenummer: 01101881.9
(22) Anmeldetag: 27.01.2001
(51) Int. Cl.: G01M 17/02, G01M 17/007

(54) **Drehschwingungsprüfstand für Kraftfahrzeug-und/oder Reifenprüfung**

(30) Priorität: 01.02.2000 DE 10004207
(71) Anmelder: RENK AKTIENGESELLSCHAFT, 86159 Augsburg (DE)
(72) Erfinder: Cordes, Jörg, 46168 Plainfield, Indiana (US); Karrer, Mathias, 86637 Wertingen (DE)
(74) Vertreter: Schober, Stefan, Dipl.-Ing.

(57) **Zusammenfassung**

Die Erfindung betrifft einen Drehschwingungsprüfstand für Kraftfahrzeuge und/oder Reifen mit einem über zwei Trommelelemente (2,3) geführten, fahrbahnsimulierenden Kraftband (1) zum Aufsetzen eines Fahrzeugrades (4), wobei das Kraftband (1) aus einem verstärkten gummielastischen Werkstoff besteht, und einem Rahmen (6), in dem die Trommelelemente (2,3) gelagert sind. Die gesamte Vorrichtung ist massenträgheitsarm ausgestaltet und zwingt Drehschwingungen mittels mindestens einem durch eine Antriebsvorrichtung (7) angetriebenen Trommelelementes (2,3) dem Fahrzeugrad (4) auf.
Desweiteren betrifft die Erfindung ein Verfahren zum Einleiten von Drehschwingungen auf das Fahrzeugrad (4).

## Beschreibung

Die Erfindung betrifft einen Drehschwingungsprüfstand für Kraftfahrzeuge und/oder Reifen gemäß Oberbegriff des Anspruches 1. Desweiteren betrifft die Erfindung ein Verfahren zum Einbringen von Drehschwingungen auf einen Prüfling gemäß Oberbegriff des unabhängigen Anspruches 21.

### [Stand der Technik]

Aus der DE 38 30 049 C1 ist eine Flachbahneinheit für Kraftfahrzeug-Prüfstände bekannt, wobei ein fahrbahnsimulierendes Band aus einem gummielastischen Werkstoff über relativ kleine Umlenkwalzen geführt und im Aufstandsbereich eines Fahrzeugrades flacheben abgestützt ist.
Um eine flachebene Ausgestaltung des Bandes der oben genannten Flachbahneinheit zu erzielen, sind die Umlenkwalzen derart beabstandet voneinander angeordnet, daß sie keine tragende Wirkung auf das Fahrzeugrad ausüben. Außerdem ist eine Vielzahl von Stützrollen und Stützwalzen innenseitig an dieses Band angestellt, um die flachebene Ausgestaltung des Bandes zu bewerkstelligen. Der Antrieb des Bandes erfolgt über eine mittig zwischen den beiden Umlenkwalzen liegende, das Band außenseitig berührende Stützwalze.

### [Aufgabe der Erfindung]

Der Erfindung liegt die Aufgabe zugrunde, den oben genannten Prüfstand für Kraftfahrzeuge derart auszugestalten, daß die Simulation von unterschiedlichen Drehschwingungen am Antriebsstrang des Kraftfahrzeuges möglich ist und ein Verfahren zu schaffen, mit dem diese Schwingungen dem Kraftfahrzeug beibringbar sind.

Erfindungsgemäß wird die Aufgabe durch die Merkmale der kennzeichnenden Teile der übergeordneten Ansprüche gelöst. Ausgestaltungen ergeben sich aus den Unteransprüchen sowie aus der Beschreibung in Verbindung mit den Zeichnungen.

Ein die Fahrbahn simulierendes Kraftband wird über zwei Trommelelemente geführt, die derart voneinander beabstandet in einem Rahmen gelagert sind, so daß die Trommelelemente eine tragende Wirkung auf einen Prüfling, also ein Kraftfahrzeugrad, ausüben. In vorteilhafter Weiterbildung dieses Merkmales können die Trommelelemente sich gegenseitig kämmend, d.h. oberflächenverzahnt im Rahmen angeordnet werden, so daß eine besonders achsennahe Anordnung der Trommelelemente zueinander möglich wird.
Das Prüftrum des Kraftbandes umschlingt den Prüfling, so daß keine zusätzlichen Stützrollen oder Stützwalzen benötigt werden, da eine flachebene Ausgestaltung des Kraftbandes für den Anwendungsbereich des Drehschwingungsprüfstandes nicht erforderlich ist.
Das Kraftband ist vorteilhafterweise innenseitig mit einer Vielrippen-Keilform ausgestaltet, wie es von Keilriemen her bekannt ist.
Eine bedeutungsvolle Weiterbildung dieses Kraftbandes ist die Gestaltung der Rippen mit senkrechten Flanken. Diese Rippen liegen auf der das Kraftband führenden Trommelelementen bis in den Grund der umfangsseitig an den Trommelelementen befindlichen Rillen hinabreichend satt an, so daß sich infolge Lastaufbringung die senkrechten Flanken dieser Rippen ausdehnen und sich im Profil dieser Rillen der Trommelelemente verspannen, um einen möglichst geringen Schlupf und eine hohe Qualität der Bandführung zu erzielen.
Ein bedeutungsvoller Vorteil ist, daß die Trommelelemente massenträgheitsarm ausgestaltet sind und der verwendete Werkstoff dieser Trommelelemente diesen Effekt begünstigt. Als Trommelwerkstoffe werden Leichtmetalle oder Verbundwerkstoffe bzw. Faserverbundwerkstoffe, die z.B. aus Glasfasern, Carbonfasern, Aramidfasern, metallischen Fasern, Naturfasern oder ähnlichen Fasern aufgebaut sind, eingesetzt.
Desweiteren erfolgt der Antrieb des Kraftbandes über mindestens ein angetriebenes Trommelelement, mittels diesem eine rotative Bewegung auf den auf dem Kraftband befindlichen Prüfling eingebracht wird.
Der Antrieb des Trommelelementes erfolgt mittels mindestens eines Antriebes.
Besonders hervorzuheben ist, daß der einzelne diese konstante rotative Bewegung verursachende Antrieb eine zusätzliche, diese konstante rotative Bewegung überlagernde, variable Drehschwingung auf das anzutreibende Trommelelement einleitet. Das bedeutet, daß nur ein Antrieb benötigt wird, der sowohl die konstante rotative Bewegung, als auch die variable Drehschwingung erzeugt.
Selbstverständlich kann die jeweilige oben beschriebene Bewegung von mehreren Antrieben bewerkstelligt werden.
Von Bedeutung ist, daß die insgesamt massenträgheitsarme Gestaltung des Drehschwingungsprüfstandes durch die Verwendung eines Hydraulikmotors oder alternativ eines Elektromotors als Antrieb für das Trommelelement begünstigt wird. Besonders hervorzuheben ist, daß eine Schlechtwegsimulation mit dem Drehschwingungsprüfstand möglich ist, wobei der Rahmen mittels translatorischer Bewegungsmittel vertikal verfahrbar ist.
Mit diesem translatorischen Bewegungsmittel kann der Drehschwingungsprüfstand mit hochfrequenten oder auch niederfrequenten Schwingungen angeregt werden, um eine derartige vertikale Bewegung des Rahmens, die der Schlechtwegsimulation entspricht, auszuführen.
Um die Schlechtwegsimulation realen Bedingungen entsprechen zu lassen, ist es während der Dauer der Prüfung möglich, die Frequenz der vertikalen Schwingungsanregung variieren zu lassen.
Ein wichtiger Vorteil des Drehschwingungsprüfstandes ist, daß die translatorischen Bewegungsmittel mindestens eine zusätzliche Bewegungsachse aufweisen, so daß weitere räumliche Verstellungen, wie sie beispielsweise bei einem Reifenprüfstand benötigt werden, realisiert werden können.

Vorteilhaft ist es auch zu sehen, daß die im Drehschwingungsprüfstand eingesetzten Kraftbänder mit variablen Oberflächen ausgestaltet sind. Hiermit kann man aus der Vielzahl von verwendbaren Oberflächenbeschichtungen verschiedene Fahrbahnbeläge und/oder Fahrbahnzustände simulieren.

Die Erfindung betrifft auch ein Verfahren zum Aufzwingen von Drehschwingungen auf einen Prüfling.
Die Verfahrensmerkmale sind in dem unabhängigen Anspruch 21 wiedergegeben. Im Einzelnen ist das Verfahren der nachfolgenden Beschreibung in Verbindung mit den Zeichnungen zu entnehmen.

### [Beispiele]

Die Erfindung soll nachstehend an einem Ausführungsbeispiel näher erläutert werden. Es zeigt schematisch:
Fig. 1 eine Seitenansicht eines Drehschwingungsprüfstandes nach der Erfindung mit darauf befindlichem Kraftfahrzeugrades,

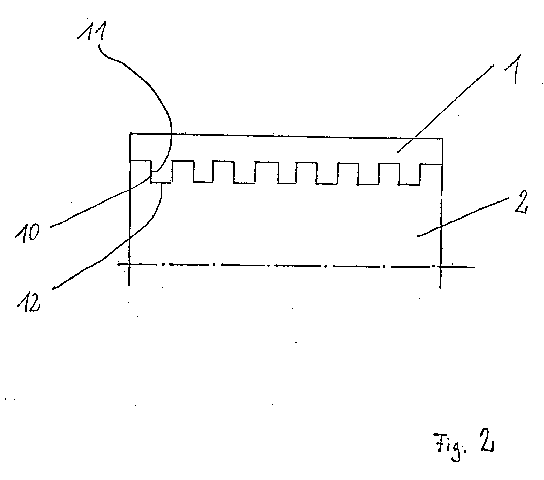

Fig. 2 einen Teilschnitt durch ein Trommelelement mit einem darauf befindlichen Kraftband mit senkrechten Flanken,
Fig. 3 eine Ansicht von Fig. 1 mit einem Kraftband in Form eines Zahnriemens,
Fig. 4 eine Seitenansicht des Drehschwingungsprüfstandes nach Fig. 1,
Fig. 5 ein Diagramm einer der Drehbewegung überlagerten Drehschwingung,
Fig. 6 eine Seitenansicht des Drehschwingungsprüfstandes mit einem zwischengeschalteten Planetengetriebe nach Fig. 4,
Fig. 7 eine Seitenansicht des Drehschwingungsprüfstandes mit einem an einem Antrieb angeordneten Arbeitszylinder nach Fig. 4 und
Fig. 8 eine Seitenansicht des Drehschwingungsprüfstandes mit einem zwischengeschalteten hydraulischen Drehzylinder nach Fig. 4.

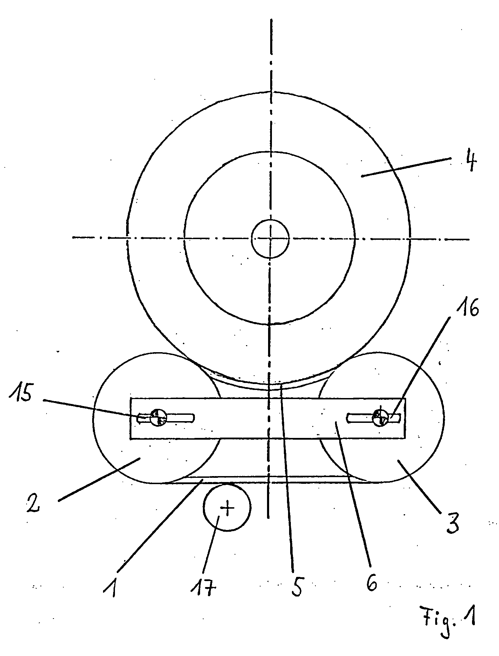

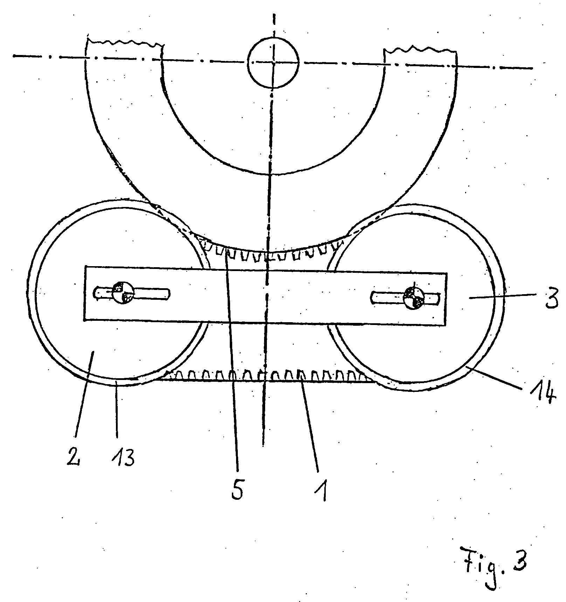

In Fig. 1 ist ein Kraftband (1) aus faserverstärktem gummielastischen Werkstoff endlos ausgebildet und um zwei Trommelelemente (2,3) geführt. Eine Innenseite des Kraftbandes (1) ist mit einer Vielrippen-Keilform versehen, wie es von Keilriemen her bekannt ist, um bei Querkrafteinfluß auf das Kraftband (1) dieses spurtreu über die Trommelelemente (2,3) führen zu können. Den Trommelelementen (2,3) sind umfangsseitig Rillen (10) angeordnet, die formentsprechend der Profilierung des Kraftbandes (1) gestaltet sind. Somit ist das Kraftband (1) sehr kostengünstig zu beziehen.
Eine bedeutungsvolle Weiterbildung dieses Kraftbandes (1) ist die Gestaltung der Rippen mit senkrechten Flanken (11). Diese derartig gestalteten Rippen liegen auf der das Kraftband (1) führenden Trommelelementen (2,3) bis in einen Grund (12) der umfangsseitig angeordneten Rillen hinabreichend satt an, so daß sich infolge Lastaufbringung - Gewicht eines Kraftfahrzeugrades (4) - die senkrechten Flanken (11) der Rippen ausdehnen und sich in den Rillen (10) der Trommelelemente (2,3) verspannen, um einen möglichst geringen Schlupf und eine hohe Qualität der Bandführung zu erzielen.
Eine in Fig. 3 dargestellte Variante ergibt sich indem das Kraftband (1) als Zahnriemen gestaltet ist, wobei dann aber an stirnseitigen Enden der Trommelelemente (2,3) Bundelemente (13,14) angeordnet sind, die bei Querkrafteinfluß auf das derartig ausgestaltete Kraftband (1) dieses spurtreu über die Trommelelemente (2,3) führen und das Kraftband (1) an einem stirnseitigen Herabgleiten von diesen Trommelelementen (2,3) hindern.
Auf einem Prüftrum (5) des Kraftbandes (1) ist das Kraftfahrzeugrad (4) aufsetzbar, wobei dieses entweder an einem Fahrzeug oder einem speziellen Prüfrahmen gelagert ist. Das Prüftrum (5) umschlingt nach Aufsetzten des Kraftfahrzeugrades (4) dieses teilweise.
Auf einem Prüftrum (5) des Kraftbandes (1) ist das Kraftfahrzeugrad (4) aufsetzbar, wobei dieses entweder an einem Fahrzeug oder einem speziellen Prüfrahmen gelagert ist. Das Prüftrum (5) umschlingt nach Aufsetzten des Kraftfahrzeugrades (4) dieses teilweise.
Die Trommelelemente (2,3) sind in einem Rahmen (6) derart angeordnet, daß sie eine tragende Wirkung auf das Kraftfahrzeugrad (4) ausüben.
Eine nicht dargestellte Variante ergibt sich, dadurch daß die Trommelelemente (2,3) sich gegenseitig kämmend im Rahmen (6) angeordnet werden, um diese tragende Wirkung auf das Kraftfahrzeugrad (4) zu bewerkstelligen.
Die Trommelelemente (2,3) sind jeweils begrenzt translatorisch verschiebbar in dem Rahmen (6) gelagert, um die Spannung des auf diesen befindlichen Kraftbandes (1) zu verstellen.
Um die Spannung des Kraftbandes (1) zu verstellen ist auch ein Spannmittel (17), insbesondere eine Spannrolle, verwendbar, welches mit einem nicht dargestellten Bewegungsmechanismus des Standes der Technik zum Kraftband (1) an- und abstellbar ist.
Die translatorische Verschiebbarkeit der Trommelelemente (2,3) kann auch dahingehend weitergebildet werden, daß während des Betriebes des Prüfstandes die Trommelelemente (2,3) mittels Stellvorrichtungen (15,16) horizontal zueinander an- und abgestellt werden, um beispielsweise das Kraftfahrzeugrad (4) mit Walkbewegungen oder mit das Kraftfahrzeugrad (4) anderweitig verformende Bewegungen zu beaufschlagen.
Die Trommelelemente (2,3) sind bevorzugt massenträgheitsarm ausgestaltet. Als Trommelwerkstoffe werden Leichtmetalle oder Verbundwerkstoffe eingesetzt. Die bevorzugt verwendeten Leichtmetalle sind Aluminium, Aluminiumlegierungen, Magnesium, Magnesiumlegierungen, Titan oder Titanlegierungen. Werden Verbundwerkstoffe, insbesondere Faserverbundwerkstoffe, als Trommelwerkstoffe verwendet, werden Glasfaserkunststoffe (GFK), Carbonfaser-Kunststoffe (CFK), Aramid-Faser-Kunststoffe (AFK) oder ähnliche bevorzugt. Kombinationen von zwei oder mehreren Faserarten, wie z.B. die Kombination von Glasfasern (GF) und Aramid-Fasern (AF) oder die Kombination von anderen Fasern zur Erzeugung eines Hybrid-Faser-Kunststoffes, sind ebenfalls anwendbar. Natürlich können auch aus Naturfasern oder aus metallischen Fasern aufgebaute Faserverbundwerkstoffe verwendet werden. Auch Kombinationen dieser Natur- und metallischen Fasern untereinander oder mit den oben bereits aufgeführten Fasern zur Erzeugungn eines Faserverbundwerkstoffes finden Verwendung.

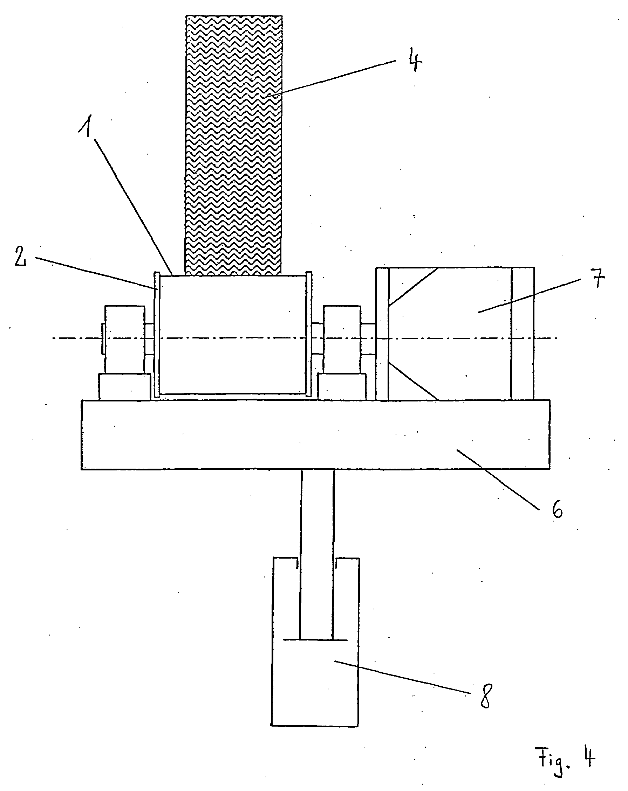

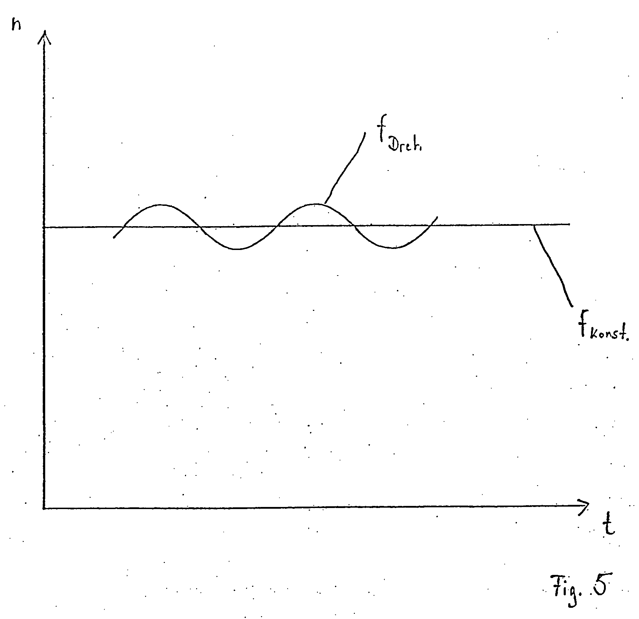

Mindestens ein Trommelelement (2,3) ist rotatorisch antreib-bzw. abbremsbar. Ein dafür erforderlicher Antrieb (7) ist in der Fig. 4 gezeigt. Der Antrieb (7) ist auf dem Rahmen (6) angeordnet. Als Antrieb (7) ist ein Hydraulikmotor oder ein Elektromotor vorgesehen.
Mittels diesem Antrieb (7) wird eine rotative Bewegung f_{konst.} auf das auf dem Kraftband (1) befindliche Kraftfahrzeugrad (4) eingebracht. Zusätzlich zu dieser konstanten rotativen Bewegung f_{konst.} wird eine variable Drehschwingung f_{Dreh} überlagert (siehe Fig. 5), die beide auf das Kraftfahrzeugrad (4) einwirken.
Besonders hervorzuheben ist, daß beide Bewegungen, sowohl die rotatorische Bewegung f_{konst.}, als auch die variable Drehschwingung f_{Dreh} mittels diesem Antrieb (7) bewerkstelligt werden kann.
Als bevorzugter Antrieb (7) ist der Hydraulikmotor zu sehen, da dieser eine geringe Massenträgheit aufweist.

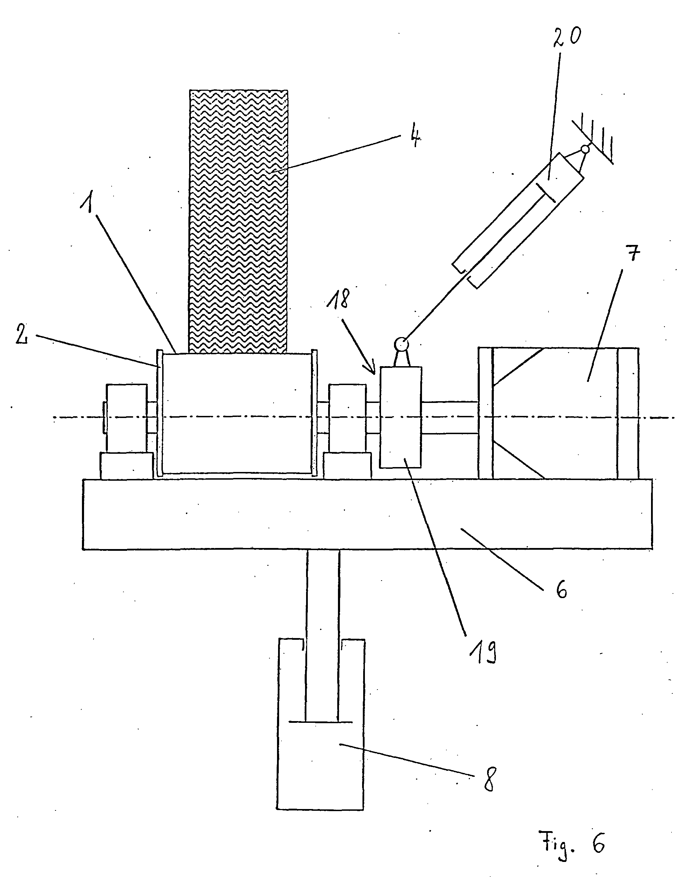

Alternativ zur oben beschriebenen Ausübung der konstanten rotativen Drehbewegung f_{konst.} und der variablen Drehschwingung f_{Dreh} mittels des einzigen Antriebes (7) können diese Bewegungen auch mittels mehrerer Antriebe bewerkstelligt werden (siehe Fig. 6, Fig. 7 und Fig. 8).

In Fig. 6 ist zwischen dem Antrieb (7) und dem von diesem Antrieb (7) angetriebenen Trommelelement (2) ein Platetengetriebe (18) angeordnet, an dessen Hohlrad (19) ein druckmittelbetriebener Arbeitszylinder (20) gelagert ist. Der druckmittelbetriebene Arbeitszylinder (20) leitet seine lineare Hin- und Herbewegung auf das Hohlrad (19) des Planetengetriebes (18) ein, so daß mittels dieser auf das Hohlrad (19) eingeleiteten Bewegung eine Bewegung resultiert, welche als eine die konstante rotative Drehbewegung fₖₒₙₛₜ. überlagernde Drehschwingung f_{Dreh} wirkt.

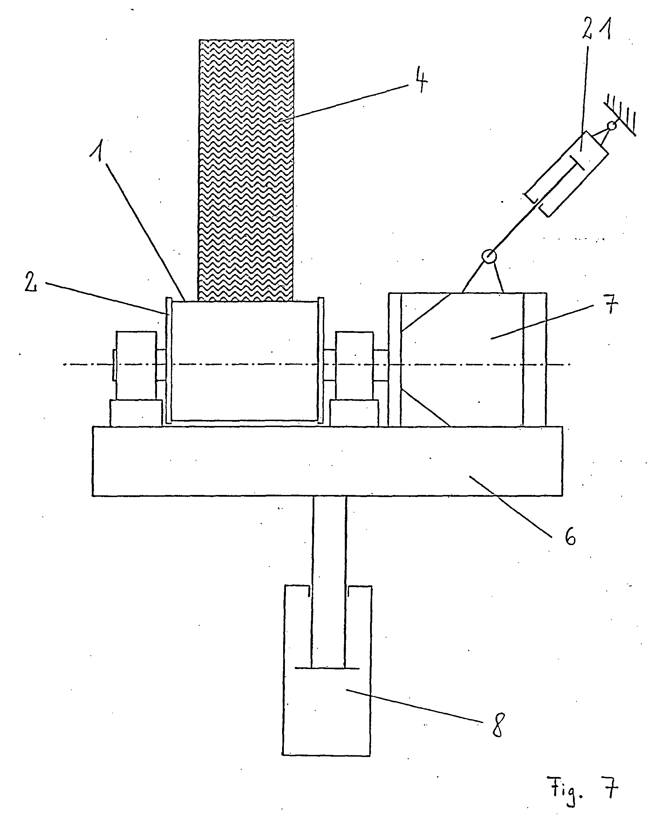

Fig. 7 zeigt eine Variante, indem der Antrieb (7) am Rahmen (6) beweglich gelagert ist und an dem Antrieb (7) ein lineares Bewegungsmittel (21) angeordnet ist. Das lineare Bewegungsmittel (21), ein druckmittelbetriebener Arbeitszylinder, leitet seine Hin- und Herbewegung auf den Antrieb (7) ein, so daß die vom Antrieb (7) auf das Trommelelement (2) ausgeübte konstante rotative Drehbewegung f_{konst.} von der aus der Hin- und Herbewegung des Antriebes (7) resultierenden Drehschwingung f_{Dreh} überlagert wird.

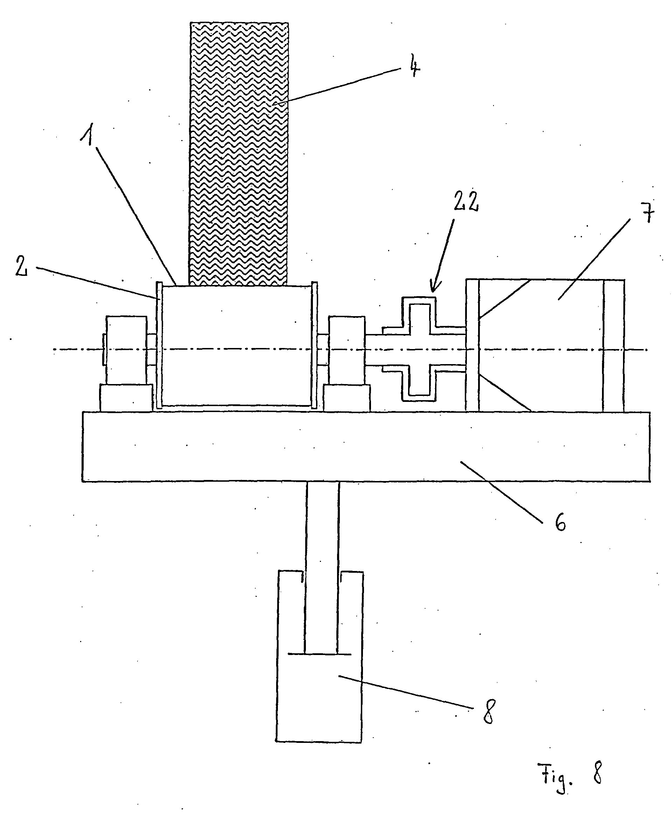

In Fig. 8 ist zwischen dem Antrieb (7) und dem von diesem Antrieb (7) angetriebenen Trommelelement (2) ein hydraulischer Drehzylinder (22) angeordnet, der die variable Drehschwingung f_{Dreh} erzeugt, welche die vom Antrieb (7) auf das Trommelelement (2) ausgeübte konstante rotativen Drehbewegung f_{konst.} Überlagert.
Mit den beschriebenen Antrieben lassen sich Drehschwingungen bis zu maximal 100 Hz auf ein Kraftfahrzeugrad (4) einbringen.

Der Rahmen (6) ist mittels eines translatorischen Bewegungsmittels (8) in vertikaler Bewegungsrichtung anregbar. Das translatorische Bewegungsmittel (8) ist vorzugsweise ein servohydraulischer Antrieb.

Durch die vertikale Anregung des Rahmens (6) ist eine Schlechtwegsimulation mit dem Drehschwingungsprüfstand möglich, wobei sowohl hochfrequente, als auch niederfrequente Schwingungen auf das Kraftfahrzeugrad (4) mittels dieses Bewegungsmittels (8) einbringbar sind.
Um die Schlechtwegsimulation realen Bedingungen entsprechen zu lassen, ist es während der Dauer der Prüfung möglich, die Frequenz der vertikalen Schwingungsanregung variieren zu lassen.
Die translatorischen Bewegungsmittel (8) weisen mindestens eine zusätzliche Bewegungsachse auf, so daß weitere räumliche Verstellungen, wie sie beispielsweise bei einem Reifenprüfstand benötigt werden, realisiert werden können.
So kann beispielsweise das Kraftband (1) stufenlos gekippt werden, um verschiedene Stürze zu simulieren. Dadurch könnte eine Überprüfung von Fahrzeugreifen und/oder Fahrwerken erfolgen. Die zusätzliche Bewegungsachse könnte aber auch derart gestaltet sein, daß das Bewegungsmittel (8) um seine eigene Achse drehbar ist, um eine Kurvenfahrt und zugehörige Lenkbewegungen zu simulieren. Hiermit könnten wiederum Fahrzeugreifen und/oder Fahrwerke beurteilt werden.
Mit dem Drehschwingungsprüfstand können nicht nur die einzeln beschriebenen Bewegungen isoliert durchgeführt werden, sondern auch beliebige Kombinationen dieser Bewegungen simultan durchgeführt werden.
Von Vorteil ist, wenn sämtliche Antriebe und Stellvorrichtungen von einer programmierparen Steuer-/Regelvorrichtung angesteuert werden.

Die im Drehschwingungsprüfstand eingesetzten Kraftbänder (1) sind mit variablen Oberflächen (9) ausgestaltet. Hiermit kann man aus der Vielzahl von verwendbaren Oberflächenbeschichtungen verschiedene Fahrbahnbeläge und/oder Fahrbahnzustände simulieren.
Die Erfindung soll sich nicht nur auf die Verwendung von endlosen Kraftbändern (1) beschränken. Es ist auch an einen Einsatz von endlichen Kraftbänder (1) zu denken, die nach dem Aufbringen auf die beiden Trommelelemente (2,3) mit Verfahren oder Mitteln nach dem bekannten Stand der Technik in eine endlosen Zustand übergeführt werden.

### [Bezugszeichenliste]

- 1: Kraftband
- 2: Trommelelement
- 3: Trommelelement
- 4: Prüfling
- 5: Trum
- 6: Rahmen
- 7: Antrieb
- 8: Bewegungsmittel
- 9: Oberfläche
- 10: Rille
- 11: Flanke
- 12: Grund/Rillengrund
- 13: Bundelement
- 14: Bundelement
- 15: Stellvorrichtung
- 16: Stellvorrichtung
- 17: Spannmittel
- 18: Planetengetriebe
- 19: Hohlrad
- 20: Arbeitszylinder
- 21: Lineares Bewegungsmittel
- 22: Hydraulischer Drehzylinder
- f_{konst.}: Rotative Bewegung
- f_{Dreh}: Drehschwingung

## Patentansprüche

1. Drehschwingungsprüfstand für Kraftfahrzeuge und/oder Reifenprüfstand mit einem über zwei Trommelelemente (2,3) geführten, fahrbahnsimulierenden Kraftband (1) zum Aufsetzen eines Fahrzeugrades (4), wobei das Kraftband (1) aus einem verstärkten gummielastischen Werkstoff besteht, und einem Rahmen (6), in dem die Trommelelemente (2,3) gelagert sind, dadurch gekennzeichnet, daß der gesamte Drehschwingungsprüfstand massenträgheitsarm ausgestaltet ist und Drehschwingungen f_{Dreh} mittels mindestens eines durch eine Antriebsvorrichtung (7) angetriebenen Trommelelementes (2,3) dem Fahrzeugrad (4) aufzwingbar sind.

2. Drehschwingungsprüfstand nach Anspruch 1, dadurch gekennzeichnet, daß die Anordnung der Trommelelemente (2,3) so gewählt ist, daß diese eine tragende Wirkung auf das Fahrzeugrad (4) ausüben.

3. Drehschwingungsprüfstand nach Anspruch 2, dadurch gekennzeichnet, daß die Trommelelemente (2,3) in einer sich gegenseitig kämmenden Ausbildung angeordnet sind.

4. Drehschwingungsprüfstand nach Anspruch 1, dadurch gekennzeichnet, daß eine massenträgheitsarme Ausgestaltung der Trommelelemente (2,3) durch die Verwendung von Leichtmetall als Werkstoff realisiert ist.

5. Drehschwingungsprüfstand nach Anspruch 4, dadurch gekennzeichnet, daß das Leichtmetall Aluminium oder eine Aluminiumlegierung ist.

6. Drehschwingungsprüfstand nach Anspruch 4, dadurch gekennzeichnet, daß das Leichtmetall Titan oder eine Titanlegierung ist.

7. Drehschwingungsprüfstand nach Anspruch 4, dadurch gekennzeichnet, daß das Leichtmetall Magnesium oder eine Magnesiumlegierung ist.

8. Drehschwingungsprüfstand nach Anspruch 1, dadurch gekennzeichnet, daß eine massenträgheitsarme Ausgestaltung der Trommelelemente (2,3) durch die Verwendung von Kunststoff als Werkstoff realisiert ist.

9. Drehschwingungsprüfstand nach Anspruch 1, dadurch gekennzeichnet, daß eine massenträgheitsarme Ausgestaltung der Trommelelemente (2,3) durch die Verwendung eines Verbundwerkstoffes als Werkstoff realisiert ist.

10. Drehschwingungsprüfstand nach Anspruch 9, dadurch gekennzeichnet, daß der Verbundwerkstoff ein Faserverbundwerkstoff ist.

11. Drehschwingungsprüfstand nach Anspruch 1, dadurch gekennzeichnet, daß das Kraftband (1) eine Vielrippen-Keilform besitzt.

12. Drehschwingungsprüfstand nach Anspruch 11, dadurch gekennzeichnet, daß die Vielrippen-Keilform nach Art eines Keilriemens ausgestaltet ist.

13. Drehschwingungsprüfstand nach Anspruch 11, dadurch gekennzeichnet, daß die Vielrippen-Keilform nach Art eines Keilriemens ausgestaltet ist, wobei die Rippen mit senkrechten Flanken (11) ausgebildet sind.

14. Drehschwingungsprüfstand nach Anspruch 13, dadurch gekennzeichnet, daß durch die senkrechten Flanken (11) eine Verspannung des Kraftbandes (1) mit den Trommelelementen (2,3) durch Lastaufbringung einbringbar ist.

15. Drehschwingungsprüfstand nach Anspruch 1, dadurch gekennzeichnet, daß die Antriebsvorrichtung (7) ein Hydraulikmotor ist.

16. Drehschwingungsprüfstand nach Anspruch 1, dadurch gekennzeichnet, daß die Antriebsvorrichtung (7) ein Elektromotor ist.

17. Drehschwingungsprüfstand nach Anspruch 1, dadurch gekennzeichnet, daß eine Schlechtwegsimulation durchführbar ist.

18. Drehschwingungsprüfstand nach Anspruch 1, dadurch gekennzeichnet, daß der Rahmen (6) mittels translatorischer Bewegungsmittel (8) vertikal verfahrbar ist.

19. Drehschwingungsprüfstand nach Anspruch 18, dadurch gekennzeichnet, daß das translatorische Bewegungsmittel (8) mindestens eine zusätzliche Bewegungsachse aufweist, so daß weitere räumliche Verstellungen möglich sind.

20. Drehschwingungsprüfstand nach Anspruch 1, dadurch gekennzeichnet, daß mittels variabler Oberflächen (9) des Kraftbandes (1) verschiedene Fahrbahnbeläge und Fahrbahnzustände simulierbar sind.

21. Verfahren mit Hilfe des Drehschwingungsprüfstandes nach Anspruch 1, dadurch gekennzeichnet, daß mittels mindestens eines angetriebenen Trommelelementes (2,3) eine Drehschwingung f_{Dreh} bis maximal 100 Hz dem Fahrzeugrad (4) aufgezwungen wird.
